# EUROPEAN PATENT APPLICATION

(11) **EP 4 245 909 A1**
(43) Date of publication of application: **20.09.2023**
(21) Application number: 23162623.5
(22) Date of filing: 17.03.2023
(51) Int. Cl.: D06F 95/00, D06F 39/00, E03C 1/00

(54) **SYSTEM AND METHOD FOR HEATING WASHING WATER FOR USE IN INDUSTRIAL TEXTILE WASHING MACHINES**

(30) Priority: 18.03.2022 NL 2031338
(71) Applicant: TBR B.V., 9461 VC Gieten (NL)
(72) Inventor: REINDERS, Jakob, Hendrik, 9461 VC Gieten (NL); KLATTER, Hendrik, 9461 VC Gieten (NL)
(74) Representative: Patentwerk B.V.

(57) **Abstract**

The invention relates to a system for regeneration of heat released by industrial textile washing machines for washing textile, in particular laundry. The invention also relates to a method for regeneration of heat released by industrial textile washing machines, in particular by making use of the system according to the invention.

## Description

The invention relates to a system for heating process water, such as washing water for use industrial textile washing machines for washing textile, in particular laundry. The invention also relates to a method for heating process water, such as washing water for use in industrial textile washing machines, in particular by making use of the system according to the invention.

Industrial textile cleaning is a service industry which responds to the need to be able to reuse textile in an attractive and hygienic manner. In industrial laundries diverse types of textile, usually formed by clothing, bedclothes and towels and so on, are here washed in a wet manner, wherein use is made of unfouled washing water which is provided with detergents and which is brought at increased temperature into intensive contact with the textile for cleaning. Prior to use, the washing water is typically heated first by means of steam generated by a steam boiler. The fouled washing water is generally subsequently discharged after use. Discharge generally takes place via the sewage system or the surface water, usually after sand, textile fibres and other components have been separated by filtering from the waste water to be discharged. The known systems have several drawbacks. A significant drawback of the steam boiler is that the use of a steam boiler is unfavourable from an energy viewpoint. The steam boiler moreover produces a relatively large amount of noise during operation. In addition to these adverse environmental effects, the steam boiler also has the drawback that it develops an increased pressure during operation, whereby there is a permanent risk of rupture and/or exploding of the steam boiler.

A first object of the invention is to provide an improved system and/or method for heating process water, in particular washing water, for use in industrial textile washing machines.

A second object of the invention is to provide an environmental-friendly system and/or method for heating water, such as washing water, for use in industrial textile washing machines.

A third object of the invention is to provide an improved system and/or method for heating washing water for use in industrial textile washing machines, wherein the use of a steam boiler can be omitted.

At least one of these objects can be achieved by providing a system for heating water, such as washing water or process water, for use or used in an industrial textile washing machine by regeneration of heat present in used, fouled process water discharged by said industrial textile washing machine and/or another industrial textile washing machine. More in particular, the system comprises: at least one heat regenerating circuit for regenerating heat from fouled water, comprising:
∘ at least one primary heat exchanger comprising:
   ▪ a first inlet fluidly connected or configured to be connected, directly or indirectly, to at least one washing water outlet of at least one washing device to conduct fouled water, such as washing water, discharged from said washing device through said heat exchanger to transfer heat to an heat transfer liquid,
   ▪ a first outlet fluidly directly or indirectly connected to said first inlet to discharge cooled down, fouled washing water from said heat exchanger,
   ▪ a second inlet for heat transfer liquid, and
   ▪ a second outlet for heated heat transfer liquid; and
∘ at least one heat pump for transferring regenerated heat to unfouled process water, such as washing water, comprising:
   ▪ a third inlet fluidly directly or indirectly connected to the second outlet of the heat exchanger to conduct the heated heat transfer liquid into the heat pump,
   ▪ and third outlet fluidly directly or indirectly connected to the second inlet of the heat exchanger to discharge cooled down heat transfer liquid from the heat pump,
   ▪ a fourth inlet connected or configured to be connected, directly or indirectly, to a cool, preferably unfouled, process water, such as washing water supply to conduct unfouled water, such as washing water, into the heat pump, and
   ▪ a fourth outlet connected or configured to be connected, directly or indirectly, to a water inlet of at least one washing device to conduct heated, unfouled water into said washing device.

The system according to the invention is actually a multi-stage system for heating to be used process water, such as washing water, preferably unfouled washing water, wherein during a first stage heat is recovered from discharged hot washing water and transferred to a heat transfer liquid, and wherein during a second stage heat is transferred from the heated heat transfer liquid to be used washing water, such as unfouled washing water, by using a heat pump, wherein the to be used process water, such as washing water, preferably unfouled washing water, is additionally heated by said heat pump, preferably to a ready-to-use temperature, which is preferably situated in between 30 and 150 degrees Celsius. The successive heat energy transfer and heat energy boost to said desired ready-to-use temperature can be realized without the use of a steam boiler, and hence without having to consume fuel and without having to generate pollutants and toxic emissions. Hence, the system according to the invention is a relatively environmental-friendly system, which moreover, is also favourable from an energy point of view. The multi-stage system may have more than the aforementioned two stages, as will be elucidated below. Where reference is made to to be used washing water, this may also be referred to as unfouled washing water or clean washing water or the like.

Preferably, the system according to the invention is configured to transfer heat (or heat energy) between flowing process streams, in particular between flowing liquid process streams. Each process stream is preferably driven by at least one pump. The system is preferably designed such that within each heat exchanger process streams are flowing in opposite directions through said heat exchanger. This counter-flow commonly improves the heat transfer between process streams. Preferably, each heat exchanger comprises at least one sensor for detecting at least one process stream related parameter, such as the process stream temperature. Preferably, at least one inlet and at least one outlet, and more preferably each inlet and each outlet of the heat regeneration circuit of the system comprises a temperature sensor for detecting various inlet and outlet temperature. Preferably, the system comprises at least one control unit for controlling the system, and in particular the electric and/or moving mechanic components of the system, such as pumps, valves, and other moving components. The control unit is preferably connected to one or more system sensors, in particular one or more temperature sensors, wherein the control unit may be programmed to control the system based upon one or more detected sensor values.

In a preferred embodiment, the primary heat exchanger of the heat regenerating circuit comprises:
- at least one container or reservoir or trough provided with the first inlet and the first outlet, and
- at least one hollow shaft, preferably at least one axially rotatable hollow shaft, provided with laterally protruding hollow discs, arranged within the container or reservoir or trough, wherein terminal portions of said shaft are connected to the second inlet and second outlet respectively, and wherein said hollow shaft is configured for flow-through of the heat transfer liquid, and
- at least one drive element, which typically comprises an electromotor, to axially rotate said hollow shaft.

Fouled washing water is guided through the container, wherein gravity may be the sole force used to force the washing water through the container. Preferably, the container is an open-top container, wherein the washing water stays in direct contact with the surrounding atmosphere. The heat transfer liquid will flow through the hollow shaft, which liquid is typically free of any solid impurities which might remain trapped in the rotor due to the separating effect of the centrifugal force generated during rotation. The rotor (hollow shaft, such as a rotatable hollow shaft) is activated by an electromotor, wherein the rotating rotor causes a turbulent movement of both the fouled washing water and the heat transfer liquid, which increases the heat energy exchange efficiency and avoids the physical pollutants deposit on walls of the heat exchanger.

Instead of the abovementioned favourable heat exchanger, also other types of liquid-to-liquid primary heat exchanger may be used.

The heat pump is configured to extract heat from the heated heat transfer liquid. Typically, the heat pump comprises one heat exchanger to transfer heat from the heated heat transfer liquid to a refrigerant of the heat pump, and another heat exchanger to transfer heat from the refrigerant to washing water, such as unfouled washing water. To this end, the heat pump preferably comprises a refrigerant circuit configured to circulate a refrigerant, wherein said refrigerant circuit comprises:
- an inlet heat exchanger connected to the third inlet and the third inlet to transfer to heat energy from the heated heat transfer liquid to said refrigerant, and
- an outlet heat exchanger connected to the fourth inlet and fourth outlet to transfer heat energy from the heated refrigerant to unfouled washing water.

The heat pump typically also comprises a compressor and an expansion valve to generate additional heat energy within the refrigerant, which is subsequently at least partially transferred to the unfouled washing water. Preferably, (natural) carbon dioxide, more preferably supercritical carbon dioxide, is used as refrigerant in a refrigerant circuit of the heat pump. Using carbon dioxide leads to a relatively high coefficient of performance, and allows the heat pump to heat the unfouled washing water to operational (ready-to-use) temperatures of between 40 and 150 degrees Celsius. In order to achieve temperature of the unfouled washing water of above 100 degrees Celsius, the unfouled washing water will have to be pressurized, which is typically realized by means of a pump. With conventional heating systems, 1 kW of input heat energy provides less than 1 kW output heat energy. With a carbon dioxide driven heat pump system, every 1 kW of input heat energy generates an average of more than 3.8 times the input heat energy as output heat energy, which makes this type of heat pump relatively attractive from an energy point of view. Instead of carbon dioxide, the heat pump may also comprise a refrigerant circuit circulating a refrigerant chosen from the group consisting of: water, ammonia, hydrocarbons, such as ethane, propane, propene, butane, and isobutane.

As mentioned above, a pump may be used to circulate the heat transfer liquid through the regenerating circuit. The pump speed (actual pump capacity) may be adjustable, and may be adjusted based upon the desired heat energy to be transferred in a period of time. The heat transfer liquid may be a coolant, such as a synthetic and/or natural coolant. The heat transfer liquid preferably water and/or glycol, and more preferably a mixture of (i) water and (ii) ethylene glycol and/or propylene glycol. Ethylene Glycol based water solutions allow the temperature of the heat transfer liquid to drop below 0 degrees Celsius without freezing, which improves the heat transfer capability in the system according to the invention. Preferably, the amount of ethylene glycol or propylene glycol in water is situated in between 10 and 30 % by volume. This provides a desired lowered freezing point, while preventing the dynamic viscosity of the mixture become too high (which would affect the flow characteristics of the heat transfer liquid). Coolant may otherwise be referred to as refrigerant.

Preferably, the heat regenerating circuit comprises at least one secondary heat exchanger formed by an air-liquid heat exchanger and configured to heat up the heat transfer liquid by transferring heat energy from an atmospheric air flow to said heat transfer liquid. This primary heat exchanger and the secondary heat exchanger could operate simultaneously. However, it is commonly more preferred that the primary heat exchanger is the main heat exchanger of the heat regenerating circuit, and that during normal operation of said circuit, the secondary heat exchanger is inactive and will or may become activated once the primary heat exchanger is deactivated. In the secondary heat exchanger, heat energy may be extracted from relatively hot atmospheric air (or another hot gas, such as flue gas or steam) and transferred to the heat transfer liquid. The application of a plurality of heat exchanger in the heat regenerating circuit facilitates to establish a (semi-)continuous operation of the heat regeneration circuit.

Preferably, the first outlet of the primary heat exchanger is connected to a drainage, in particular a drainage channel. Optionally, the drainage channel is provided with a filter device for removing at least a fraction of solid particles from the fouled washing water before actually draining. It is imaginable that used washing water is cleaned and subsequently re-used.

Preferably, the system comprises at least one first (hot water) reservoir for storing heated washing water, such as washing water, preferably unfouled washing water, wherein the fourth outlet is fluidly directly or indirectly connected to said first reservoir, wherein said first reservoir is configured to be fluidly directly or indirectly connected to at least one washing device. The reservoir act as buffer or storage tank to store hot unfouled washing water to be used.

The system preferably comprises an intermediate heat exchanger positioned and connected upstream of the heat regenerating circuit, wherein the intermediate heat exchanger comprises:
- a fifth inlet configured to be fluidly directly or indirectly connected to said at least one washing water outlet to conduct fouled washing water through said heat exchanger to transfer a part of the heat of said fouled washing water to unfouled washing water,
- a fifth outlet fluidly connected to said fifth inlet to discharge cooled down, fouled washing water from said heat exchanger, and connected directly or indirectly to the first inlet of the heat regenerating circuit,
- a sixth inlet for cold unfouled washing water to conduct cold unfouled washing water into the intermediate heat exchanger, and
- a sixth outlet configured to be fluidly directly or indirectly connected to a washing water inlet of at least one washing device to conduct heated, unfouled washing water into said washing device.

This upstream intermediate heat exchanger can be used to extract an initial fraction of the heat energy from fouled washing water, before this partially cooled down fouled washing water is guided through primary heat exchanger.

However, it is also imaginable that the intermediate heat exchanger is another type of heat exchanger than the primary heat exchanger.

Preferably, the system comprises at least one industrial washing device connected, directly or indirectly, to the sixth outlet and/or to the fifth inlet of the intermediate heat exchanger. Preferably, the system comprises at least one industrial washing device connected, directly or indirectly, to the first inlet of the primary heat exchanger of the heat regenerating circuit. Preferably, the system comprises at least one industrial washing device connected, directly or indirectly, to the fourth outlet of the heat pump of the heat regenerating circuit. Preferably, the system comprises at least one industrial washing device connected, directly or indirectly, to the first reservoir (if applied) and/or to the second reservoir (if applied). Preferably, the system comprises at least one industrial washing device connected, directly or indirectly, both the first inlet of the primary heat exchanger and to the fourth outlet of the heat pump of the heat regenerating circuit. In this manner, the washing machine (also) makes part of a heat energy circuit.

Preferably, the system comprises at least one industrial washing device comprising:
- at least one washing compartment, such as a chamber, for washing textile, in particular laundry,
- at least one washing water inlet connected to said washing chamber to conduct warm heated washing water into said washing chamber, and
   at least one washing water outlet connected to said washing chamber to discharge fouled washing water from said washing compartment, such as a chamber, wherein the said washing water outlet is connected directly or indirectly to the first inlet of the primary heat exchanger.

Optionally, in addition to the heat energy extracted from used, fouled washing water, further heat energy may be extracted from further components of an industrial washing line, such as hot air released by a textile dryer, wherein use can be made of one or more additional heat exchangers to extract said additional heat energy from hot (fouled) air streams. The one or more textile dryers and/or one or more further heat generating component of the washing line may make part of the system according to the invention.

The invention also relates to a method for heating washing water for use in an industrial textile washing machine, in particular by regenerating heat released by at least one industrial textile washing machine, wherein preferably use is made of a system according to one of the foregoing claims, comprising the steps of:
A) conducting hot fouled washing water discharged from at least one industrial washing device into at least one primary heat exchanger,
B) conducting a heat transfer liquid into said primary heat exchanger to allow heat to be transferred from the hot fouled washing water to said heat transfer liquid,
C) subsequently conducting said heated heat transfer liquid into a heat pump,
D) conducting cool unfouled washing water into said heat pump allowing heat to be transferred from said heated heat transfer liquid to said unfouled washing water, and
E) conducting said heated unfouled washing water into at least one industrial washing machine for washing textile, in particular laundry.

Preferred embodiment of the invention are set out in the non-limitative set of embodiments presented below:
1. System for heating process water, such as washing water, for use in an industrial textile washing machine, comprising:
   - at least one heat regenerating circuit for regenerating heat from fouled washing water, comprising:
      ∘ at least one primary heat exchanger comprising:
         ▪ a first inlet fluidly configured to be directly or indirectly connected to at least one washing water outlet of at least one washing device to conduct fouled washing water discharged from said washing device through said heat exchanger to transfer heat to an heat transfer liquid,
         ▪ a first outlet fluidly directly or indirectly connected to said first inlet to discharge cooled down, fouled washing water from said heat exchanger,
         ▪ a second inlet for heat transfer liquid, and
         ▪ a second outlet for heated heat transfer liquid;
      ∘ at least one heat pump for transferring regenerated heat to unfouled washing water, comprising:
         ▪ a third inlet fluidly directly or indirectly connected to the second outlet of the heat exchanger to conduct the heated heat transfer liquid into the heat pump,
         ▪ and third outlet fluidly directly or indirectly connected to the second inlet of the heat exchanger to discharge cooled down heat transfer liquid from the heat pump,
         ▪ a fourth inlet fluidly directly or indirectly connected or configured to be connected to a cool unfouled washing water supply to conduct unfouled washing water into the heat pump, and
         ▪ a fourth outlet connected or configured to be connected, directly or indirectly, to a washing water inlet of at least one washing device to conduct heated, unfouled washing water into said washing device.
2. System according to embodiment 1, wherein the primary heat exchanger of the heat regenerating circuit comprises:
   - at least one container provided with the first inlet and the first outlet, and
   - at least one hollow shaft, preferably at least one axially rotatable hollow shaft provided with laterally protruding hollows discs, arranged within the container or reservoir, wherein terminal portions of said shaft are connected to the second inlet and second outlet respectively, and wherein the hollow shaft is configured for flow-through of heat transfer liquid, and
   - at least one drive element to axially rotate said hollow shaft.
3. System according to one of the foregoing embodiments, wherein the heat pump comprises a refrigerant circuit configured to circulate a refrigerant, wherein said refrigerant circuit comprises:
   - an inlet heat exchanger connected to the third inlet and the third inlet to transfer to heat energy from the heated heat transfer liquid to said refrigerant, and
   - an outlet heat exchanger connected to the fourth inlet and fourth outlet to transfer heat energy from the heated refrigerant to unfouled washing water.
4. System according to embodiment 3, wherein the refrigerant circuit comprises a compressor and an expansion valve.
5. System according to one of the foregoing embodiments, wherein the heat pump comprises a refrigerant circuit circulating a refrigerant chosen from the group consisting of: carbon dioxide, water, ammonia, hydrocarbons, such as ethane, propane, propene, butane, and isobutane.
6. System according to one of the foregoing embodiments, wherein the heat pump is configured to heat up cold unfouled washing water with at least 40 degrees Celsius.
7. System according to one of the foregoing embodiments, wherein the heat regenerating circuit comprises at least one intermediate pump to circulate the heat transfer liquid.
8. System according to one of the foregoing embodiments, wherein the heat transfer liquid comprises coolant, preferably water and/or glycol.
9. System according to one of the foregoing embodiments, wherein the heat regenerating circuit comprises at least one secondary heat exchanger formed by an air-liquid heat exchanger and configured to heat up the heat transfer liquid by transferring heat energy from an atmospheric air flow to said heat transfer liquid.
10. System according to one of the foregoing embodiments, wherein the first outlet of the primary heat exchanger is connected to a drainage, in particular a drainage channel.
11. System according to one of the foregoing embodiments, wherein the system comprises at least one first reservoir for storing heated unfouled washing water, wherein the fourth outlet is fluidly directly or indirectly connected to said first reservoir, wherein said first reservoir is configured to be fluidly directly or indirectly connected to at least one washing device.
12. System according to one of the foregoing embodiments, wherein the system comprises an intermediate heat exchanger positioned and connected upstream of the heat regenerating circuit, wherein the intermediate heat exchanger comprises:
   - a fifth inlet configured to be fluidly directly or indirectly connected to said at least one washing water outlet to conduct fouled washing water through said heat exchanger to transfer a part of the heat of said fouled washing water to unfouled washing water,
   - a fifth outlet fluidly connected to said fifth inlet to discharge cooled down, fouled washing water from said heat exchanger, and connected directly or indirectly to the first inlet of the heat regenerating circuit,
   - a sixth inlet for cold unfouled washing water to conduct cold unfouled washing water into the intermediate heat exchanger, and
   - a sixth outlet configured to be fluidly directly or indirectly connected to a washing water inlet of at least one washing device to conduct heated, unfouled washing water into said washing device.
13. System according to embodiment 12, wherein the intermediate heat exchanger comprises:
   - at least one container provided with the fifth inlet and the fifth outlet, and
   - at least one hollow shaft, preferably at least one axially rotatable hollow shaft, provided with laterally protruding hollows discs, arranged within the container, wherein terminal portions of said shaft are connected to the sixth inlet and sixth outlet respectively, and wherein the hollow shaft is configured for flow-through of unfouled washing water, and
   - at least one drive element to axially rotate said hollow shaft.
14. System according to embodiment 11 or 12, wherein the system comprises at least one second reservoir for storing heated unfouled washing water, wherein the sixth outlet is fluidly directly or indirectly connected to said second reservoir, wherein said second reservoir is configured to be fluidly directly or indirectly connected to at least one washing device.
15. System according to one of embodiments 12-14, wherein the system comprises at least one industrial washing device connected to the fifth inlet of the intermediate heat exchanger.
16. System according to one of the foregoing embodiments, wherein the system comprises at least one industrial washing device connected to the first inlet of the primary heat exchanger of the heat regenerating circuit.
17. System according to one of the foregoing embodiments, wherein the system comprises at least one industrial washing device connected to the fourth outlet of the heat pump of the heat regenerating circuit.
18. System according to embodiment 17, wherein the system comprises at least one industrial washing device connected both the first inlet of the primary heat exchanger and to the fourth outlet of the heat pump of the heat regenerating circuit.
19. System according to one of the foregoing embodiments, wherein the system comprises at least one industrial washing device comprising:
   - at least one washing chamber for washing textile, in particular laundry,
   - at least one washing water inlet connected to said washing chamber to conduct warm heated washing water into said washing chamber, and
      at least one washing water outlet connected to said washing chamber to discharge fouled washing water from said washing chamber, wherein the said washing water outlet is connected directly or indirectly to the first inlet of the primary heat exchanger.
20. System for heating process water, such as washing water, for use or used in an industrial textile washing machine, preferably according to one of the foregoing embodiments, comprising:
   - at least one heat regenerating circuit for regenerating heat from process water, in particular fouled and/or used washing water, comprising:
      ∘ at least one primary heat exchanger comprising:
         ▪ a first inlet fluidly configured to be directly or indirectly connected to at least one washing water outlet of at least one washing device to conduct process water, in particular fouled and/or used washing water, discharged from said washing device through said heat exchanger to transfer heat to an heat transfer liquid,
         ▪ a first outlet fluidly directly or indirectly connected to said first inlet to discharge cooled down, process water, in particular fouled and/or used washing water from said heat exchanger,
         ▪ a second inlet for heat transfer liquid, and
         ▪ a second outlet for heated heat transfer liquid;
      ∘ at least one heat pump for transferring regenerated heat to unfouled washing water, comprising:
         ▪ a third inlet fluidly directly or indirectly connected to the second outlet of the heat exchanger to conduct the heated heat transfer liquid into the heat pump,
         ▪ and third outlet fluidly directly or indirectly connected to the second inlet of the heat exchanger to discharge cooled down heat transfer liquid from the heat pump,
         ▪ a fourth inlet fluidly directly or indirectly connected or configured to be connected to a cool process water supply, in particular unfouled washing water supply, to conduct unfouled washing water into the heat pump, and
         ▪ a fourth outlet connected or configured to be connected, directly or indirectly, to a process water inlet, in particular washing water inlet, of at least one washing device to conduct heated process water, in particular unfouled washing water, into said washing device,
   wherein the system comprises an intermediate heat exchanger positioned and connected upstream of the heat regenerating circuit, wherein the intermediate heat exchanger comprises:
   - a fifth inlet configured to be fluidly directly or indirectly connected to said at least one washing water outlet to conduct used process water, in particular fouled washing water, through said heat exchanger to transfer a part of the heat of said used process water, in particular fouled washing water, to unused process water, in particular unfouled washing water,
   - a fifth outlet fluidly connected to said fifth inlet to discharge cooled down, used process water, in particular fouled washing water, from said heat exchanger, and connected directly or indirectly to the first inlet of the heat regenerating circuit,
   - a sixth inlet for cold unused process water, in particular unfouled washing water, to conduct cold unused process water, in particular unfouled washing water, into the intermediate heat exchanger, and
   - a sixth outlet configured to be fluidly directly or indirectly connected to a washing water inlet of at least one washing device to conduct heated, unused process water, in particular unfouled washing water, into said washing device.
21. A method for heating washing water for use in an industrial textile washing machine, in particular by regenerating heat released by at least one industrial textile washing machine, wherein preferably use is made of a system according to one of the foregoing embodiments, comprising the steps of:
   A) conducting hot fouled washing water discharged from at least one industrial washing device into at least one primary heat exchanger,
   B) conducting a heat transfer liquid into said primary heat exchanger to allow heat to be transferred from the hot fouled washing water to said heat transfer liquid,
   C) subsequently conducting said heated heat transfer liquid into a heat pump,
   D) conducting cool unfouled washing water into said heat pump allowing heat to be transferred from said heated heat transfer liquid to said unfouled washing water, and
   E) conducting said heated unfouled washing water into at least one industrial washing machine for washing textile, in particular laundry.
22. A method for heating process water, in particular washing water, for use in an industrial textile washing machine, in particular by regenerating heat released by at least one industrial textile washing machine, wherein preferably use is made of a system according to one of the foregoing embodiments, comprising the steps of:
   A) conducting hot used process water, in particular hot fouled washing water, discharged from at least one industrial washing device into at least one primary heat exchanger,
   B) conducting a heat transfer liquid into said primary heat exchanger to allow heat to be transferred from the hot process water, in particular hot fouled washing water, to said heat transfer liquid,
   C) subsequently conducting said heated heat transfer liquid into a heat pump,
   D) conducting cool unused process water, in particular unfouled washing water, into said heat pump allowing heat to be transferred from said heated heat transfer liquid to said unused process water, in particular unfouled washing water, and
   E) conducting said heated unused processed water, in particular unfouled washing water, into at least one industrial washing machine for washing and/or treating textile, in particular laundry.

The present invention will hereinafter be further elucidated based on the following non-limitative figures, wherein:
- figure 1 shows a first preferred embodiment of the system according to the invention; and
- figure 2 shows a second preferred embodiment according to the invention.

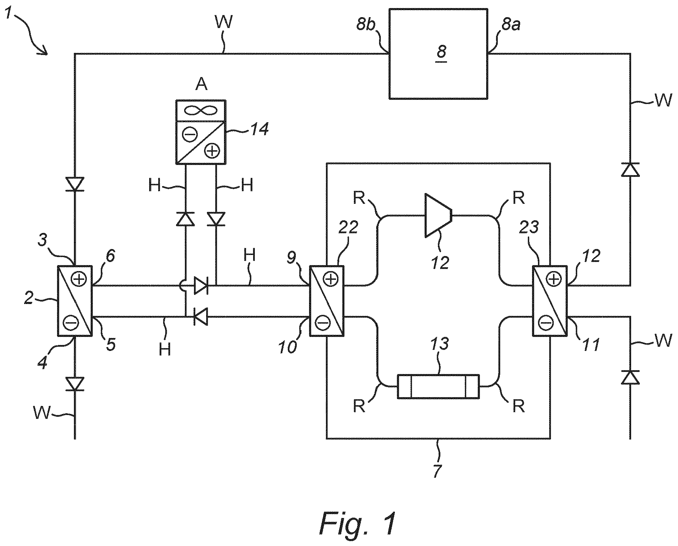

Figure 1 gives a schematic representation of the system 1 for heating washing water for use in an industrial textile washing plant. Such an industrial textile washing plant may comprise one or more washing devices 8. The present invention is however not limited to any number of washing devices 8. The one or more washing devices 8 as such may be parallelly and/or serially connected to at least one heat generating circuit of the system 1. The amount of washing devices 8 connected in parallel or in series may depend on the amount of heat required per device 8. The washing device may comprise a device inlet 8a which provides unfouled, heated washing water to the device 8. Moreover, once a wash is finished, or the washing water should be refreshed for new, unfouled washing water, the water is fouled and should be removed from the device 8 via at least one device outlet 8b. The water, which is removed via said at least one device outlet 8b, however comprises some residual heat. It desired to reuse as much of the heat that resides in the fouled water from the industrial washing device 8. To this end, a primary heat exchanger 2 may be provided. Said primary heat exchanger 2 is preferably of the liquid to liquid type. The primary heat exchanger 2 comprises a first inlet 3, which in this non-limitative embodiment is directly connected to the device outlet 8b of the industrial washing device 8, for providing the primary heat exchanger 2 with hot, fouled washing water. Once the hot fouled water entered the primary heat exchanger 2, heat is extracted from said hot fouled washing water, and once most of the heat is extracted, the cooled fouled washing water finds its way out of the primary heat exchanger 2 via a first outlet 4. The heat extracted may be used to heat up a heat transfer liquid. Said heat transfer liquid, which is yet to be heated, may enter the primary heat exchanger 2 via a second inlet 5. After extracting the residual heat present in the hot fouled washing water, the heated heat transfer liquid may leave the primary heat exchanger 2 via a second outlet. Although for clarity purposes it is not depicted, it is conceivable that the primary heat exchanger of the heat regenerating circuit comprises at least one container provided with the first inlet and the first outlet, and at least one hollow shaft, preferably at least one axially rotatable hollow shaft provided with laterally protruding hollows discs, wherein terminal portions of said shaft are connected to the second inlet and second outlet respectively, and at least one drive element to axially rotate said hollow shaft.

In addition to the primary heat exchanger 2, the system 1 according to the invention further comprises a heat pump 7. The heat pump 7 allows to transfer regenerated heat from the fouled washing water to unfouled washing water, and providing an additional heat boost. The heat pump 7 thereto comprises a third inlet 9, which is fluidly connected to the second outlet 6 of the primary heat exchanger 2. As such, the heated heat transfer liquid that has extracted residual energy from the fouled water may enter the heat pump 7 via said third inlet 9. The heat pump 7 may further comprise at least one third outlet 10, which is fluidly connected to the second inlet 5 of the primary heat exchanger 2. The cooled heat transfer liquid may be pumped from the third outlet 10 of the heat pump 7 to the second inlet 5 of the primary heat exchanger 2 in order to be heated. Entering the heat pump 7 of the heat transfer liquid should be understood as the heat transfer liquid entering, via said third inlet 9 a inlet heat exchanger 22 that is part of the heat pump 7. Similarly, leaving the heat pump 7 of the heat transfer liquid should be understood as the heat transfer liquid leaving said heat exchanger 22 that is part of the heat pump 7. Preferably said heat exchanger 22 is a liquid to liquid type of heat exchanger, wherein the refrigerant of the heat pump 7 may for example be R744, which is a refrigerant grade of CO2. Alternatively, water, ammonia, hydrocarbons, such as ethane, propane, propene, butane, and isobutane may be suitable refrigerants. Once heat is extracted from the heated heat transfer liquid by the refrigerant of the heat pump 7, the refrigerant may pass an expansion valve 12, and subsequently pass through an outlet heat exchanger 23 of the heat pump 7, preferably of the same type as the inlet heat exchanger 22 of the heat pump 7. This outlet heat exchanger 23 is configured to heat up the unfouled washing water to a temperature of around 85 to 90 degrees Celsius. The cold unfouled washing water may enter the second heat exchanger 22 via a fourth inlet 11, and once sufficient heat is transferred to the unfouled washing water, the heated unfouled washing water may leave the heat pump 7 via a fourth outlet 12. The refrigerant may, after passing through the outlet heat exchanger 23, flow through a compressor 13, and thereafter enter the inlet heat exchanger 22 of the heat pump 7. For clarity purposes, it is indicated what type of liquid or gas runs through which part of the circuitry by means of letters. Inside the heat pump 7, the circuit which comprises the refrigerant, such as carbon dioxide, is indicated by the letter R. In the heat regenerating circuit, the circuit through which the heat transfer liquid flows is indicated by the letter H. The letter A indicates air, and lastly, the letter W indicates the circuit which is configured for washing water, either fouled or unfouled. The heat pump may heat up the cold unfouled water by at least 40 degrees Celsius. If the temperature of the fouled washing water is not suitable for extracting or providing a sufficient amount of heat to heat up the heat transfer liquid, a secondary heat exchanger 14 may be provided. Said heat exchanger 14 may be an air to liquid type of heat exchanger 14, optionally further provided with a ventilator to force an airflow. The heat transfer liquid may be heated or cooled by the secondary heat exchanger 14.

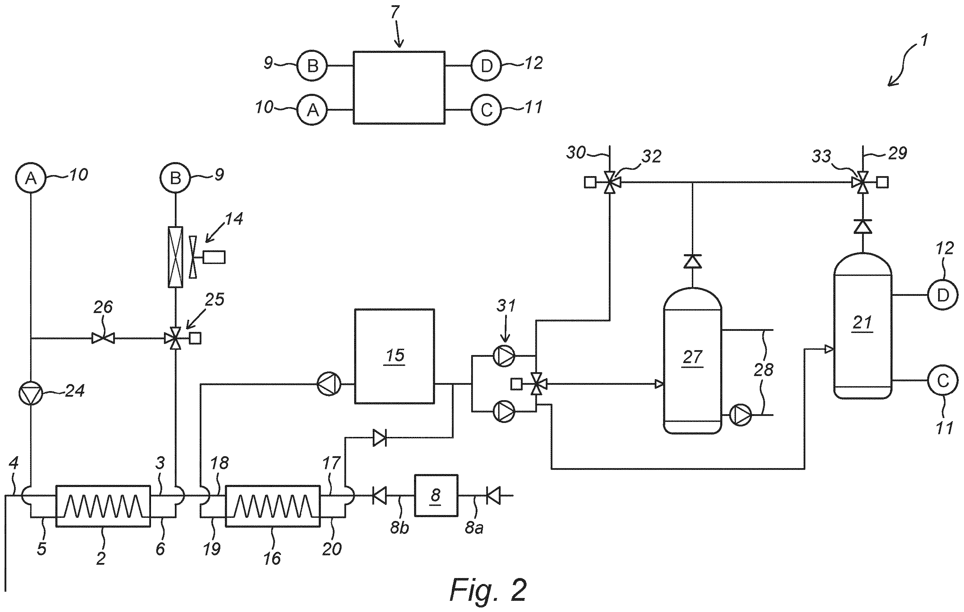

Figure 2 depicts a second non-limitative embodiment of the system 1 according to the invention. Similarly as shown in the embodiment of figure 1, a washing device 8 is provided with unfouled washing water via a device inlet 8a, and the fouled washing water leaves the device 8 via a device outlet 8b. The device outlet 8b provides the fouled water to an intermediate heat exchanger 16. The Intermediate heat exchanger 16 is positioned and connected upstream of the heat regenerating circuit. The intermediate heat exchanger 16 comprises a fifth inlet 17, where the fouled washing water may enter the intermediate heat exchanger 16. The fouled washing water may be guided through the intermediate heat exchanger 16 and leave via a fifth outlet 18. The fouled washing water which enters via the fifth inlet 17 is warmer compared to the fouled washing water that leaves via the fifth outlet 18, and hence heat energy is extracted from said fouled washing water. The fifth outlet 18 may be connected to the heat regeneration circuit. The intermediate heat exchanger further comprises a sixth inlet 19, which allows cold, unfouled washing water to enter the intermediate heat exchanger 16. The cold unfouled washing water is heated by the heat energy extracted from the fouled washing water that enters via the fifth inlet 17. Via a sixth outlet 20 the heated unfouled washing water may leave the intermediate heat exchanger.

In a similar manner as described with reference to figure 1, a heat regeneration circuit comprises a primary heat exchanger 2, provided with a first inlet 3, and first outlet 4, a second inlet 5 and second outlet 6, and a heat pump 7. In this figure the heat pump 7 is depicted separately for clarity reasons. The letters A, B, C, and D, indicate where the heat pump 7 is connected to the system 1. It is conceivable that the fifth outlet 18 is connected to the first inlet 3 in series. Hence, the intermediate heat exchanger 16 in this respect may function as a primary heat extraction step. The still warm fouled washing water that leaves the intermediate heat exchanger 16 from the fifth outlet 18 subsequently enters the primary heat exchanger 2 via the first inlet 3, where it is used to heat up the cold heat transfer liquid that entered via the second inlet 5. A pump 24 is depicted which may be used to pump the heat transfer liquid around. Via a three way valve 24, and a controllable valve 24, the flow heat transfer liquid may be controlled such as to allow an optimal flow. This may especially be beneficial in case the heat transfer liquid is not ready to be used in the heat pump 7, in which instance the circuit may for example be shorted.

The system 1 may be provided with at least one first reservoir 21, for storing heated unfouled water. The reservoir 12 is preferably directly or indirectly connected to the fourth outlet 12 of the heat pump 7. It is conceivable that the reservoir 21 is also connected to the fourth inlet 11 of the heat pump 7, such that it is in fluid connection with the heat regenerating circuit. Preferably the first reservoir 21 is configured for holding unfouled heated washing water at a temperature around 85 to 90 degrees Celsius. It is conceivable that the circuitry is configured for maintaining the temperature of the water in the first reservoir 21 at a constant temperature. Optionally, a further second reservoir 27 is provided in the system 1. Said second reservoir 27 may for example be configured for holding unfouled washing water at a different temperature, such as a temperature between 30 and 50 degrees Celsius. The second reservoir 27 may be provided with two fluid connections 28, which may be used to connect the second reservoir to a further device, such as a heat exchanger or boiler for providing or receiving unfouled washing water from and to the second reservoir 27. A heat exchanger that is fluidly connected to connections 28 may be used for example to increase the temperature of the unfouled washing water in the second reservoir 27 to a temperature which is above 30 degrees Celsius.

The first and/or second reservoir 21, 27 may further be connected to a first and second reservoir output 29, 30. Preferably one of the two reservoir outputs 29 is configured to provide hot unfouled washing water at a high temperature to at least one washing device 8, e.g. at a temperature of 85 degrees Celsius. The other reservoir output 30 may be configured for providing unfouled washing water at a lower temperature (e.g. at a temperature between 30 and 50 degrees Celsius from the second reservoir 27). This lower temperature unfouled washing water may be used for processes which require a typical temperature lower than that of the first reservoir 21.

The sixth outlet 20 may optionally be connected to a reservoir 15, which may hold cold unfouled water, this reservoir may be held at a constant temperature of around 30 degrees Celsius. The unfouled water may be pumped from said reservoir 15 to the intermediate heat exchanger 16 such as to heat the unfouled washing water to a temperature of around 30 degrees Celsius. If a second reservoir 27 is available, the sixth outlet 20 may, via a connecting portion 31, be connected to the second reservoir 27 in order to fill the second reservoir 27 with unfouled water of 30 degrees Celsius. The connection portion 31 may comprise one or more pumps, preferably adjustable pumps and/or one or more valves, such as three-way valves. However, if the reservoir is full, or not present, the unfouled washing water of 30 degrees Celsius may be directly coupled, via the connecting portion, to one of the reservoir outputs 29, 30. The reservoir outputs 29, 30 may preferably provide any temperature between 30 and 90 degrees, by using two mixing valves 32, 33, which allow mixing the hot unfouled washing water from the first reservoir 21 (e.g. at 85 to 90 degrees Celsius) with the colder unfouled washing water (e.g. at 30 degrees Celsius) in order to provide not only hot and cold unfouled washing water, but any temperature situated between the extreme values.

The hereby presented invention has been illustrated by several illustrative embodiments. It is noted that any features of the invention described herein are disclosed not only in their explicit combination, but also as a group of features wherein each feature should be construed as disclosed independent from another, and as such is an individual, preferred feature of the invention.

In the present application, the non-limited verb "comprise" and conjugations thereof, is used in a broader sense by which also the limited verb "contain", "substantially consist of", "formed by" are included. The process water used in the system and/or method according to the invention is typically washing water used or to be used in a washing machine of said system. The washing water may also be traditional washing water, steam or condensed washing water used and/or produced during the laundering process. During the laundering process, the washing water will be in direct contact with the laundry used in the system and/or method according to the invention. It is however, also imaginable and possible that, instead of direct contact washing water, other process water is used in at least one washing machine the system and/or method according to the invention, wherein this other process water will not have direct contact with the laundry used in the system and/or method according to the invention. This other process water can for example be used to heat a washing machine and/or to heat washing water (to be) used in a washing machine. The at least one washing machine used in the system and/or method according to the invention is normally a machine that uses water (or steam) during the industrial textile laundering process. The washing machine may be a traditional washing machine, wherein (heated) washing water is used to remove foul from and hence to clean laundry. The washing machine may also and additionally be another washing machine that uses water (and/or steam) during the industrial textile laundering process. Examples of such alternative water (and/or steam) consuming and/or water (and/or steam) producing washing machines are a rinsing machine, a pressing machine (ironing machine), a folding machine, an agitation machine, and a drying machine.

## Claims

1. System for heating process water, such as washing water, for use or used in an industrial textile washing machine, comprising:
- at least one heat regenerating circuit for regenerating heat from process water, in particular fouled and/or used washing water, comprising:
∘ at least one primary heat exchanger comprising:
▪ a first inlet fluidly configured to be directly or indirectly connected to at least one washing water outlet of at least one washing device to conduct process water, in particular fouled and/or used washing water, discharged from said washing device through said heat exchanger to transfer heat to an heat transfer liquid,
▪ a first outlet fluidly directly or indirectly connected to said first inlet to discharge cooled down, process water, in particular fouled and/or used washing water from said heat exchanger,
▪ a second inlet for heat transfer liquid, and
▪ a second outlet for heated heat transfer liquid;
∘ at least one heat pump for transferring regenerated heat to unfouled washing water, comprising:
▪ a third inlet fluidly directly or indirectly connected to the second outlet of the heat exchanger to conduct the heated heat transfer liquid into the heat pump,
▪ and third outlet fluidly directly or indirectly connected to the second inlet of the heat exchanger to discharge cooled down heat transfer liquid from the heat pump,
▪ a fourth inlet fluidly directly or indirectly connected or configured to be connected to a cool process water supply, in particular unfouled washing water supply, to conduct unfouled washing water into the heat pump, and
▪ a fourth outlet connected or configured to be connected, directly or indirectly, to a process water inlet, in particular washing water inlet, of at least one washing device to conduct heated process water, in particular unfouled washing water, into said washing device,
wherein the system comprises an intermediate heat exchanger positioned and connected upstream of the heat regenerating circuit, wherein the intermediate heat exchanger comprises:
- a fifth inlet configured to be fluidly directly or indirectly connected to said at least one washing water outlet to conduct used process water, in particular fouled washing water, through said heat exchanger to transfer a part of the heat of said used process water, in particular fouled washing water, to unused process water, in particular unfouled washing water,
- a fifth outlet fluidly connected to said fifth inlet to discharge cooled down, used process water, in particular fouled washing water, from said heat exchanger, and connected directly or indirectly to the first inlet of the heat regenerating circuit,
- a sixth inlet for cold unused process water, in particular unfouled washing water, to conduct cold unused process water, in particular unfouled washing water, into the intermediate heat exchanger, and
- a sixth outlet configured to be fluidly directly or indirectly connected to a washing water inlet of at least one washing device to conduct heated, unused process water, in particular unfouled washing water, into said washing device.

2. System according to claim 1, wherein the primary heat exchanger of the heat regenerating circuit comprises:
- at least one container provided with the first inlet and the first outlet, and
- at least one hollow shaft, preferably at least one axially rotatable hollow shaft provided with laterally protruding hollows discs, arranged within the container or reservoir, wherein terminal portions of said shaft are connected to the second inlet and second outlet respectively, and wherein the hollow shaft is configured for flow-through of heat transfer liquid, and
- at least one drive element to axially rotate said hollow shaft.

3. System according to one of the foregoing claims, wherein the heat pump comprises a refrigerant circuit configured to circulate a refrigerant, wherein said refrigerant circuit comprises:
- an inlet heat exchanger connected to the third inlet and the third inlet to transfer to heat energy from the heated heat transfer liquid to said refrigerant, and
- an outlet heat exchanger connected to the fourth inlet and fourth outlet to transfer heat energy from the heated refrigerant to unused process water, in particular unfouled washing water.

4. System according to one of the foregoing claims, wherein the heat pump is configured to heat up cold unused process water, in particular unfouled washing water, with at least 40 degrees Celsius.

5. System according to one of the foregoing claims, wherein the heat regenerating circuit comprises at least one intermediate pump to circulate the heat transfer liquid.

6. System according to one of the foregoing claims, wherein the heat regenerating circuit comprises at least one secondary heat exchanger formed by an air-liquid heat exchanger and configured to heat up the heat transfer liquid by transferring heat energy from an atmospheric air flow to said heat transfer liquid.

7. System according to one of the foregoing claims, wherein the first outlet of the primary heat exchanger is connected to a drainage, in particular a drainage channel.

8. System according to one of the foregoing claims, wherein the system comprises at least one first reservoir for storing heated unused process water, in particular unfouled washing water, wherein the fourth outlet is fluidly directly or indirectly connected to said first reservoir, wherein said first reservoir is configured to be fluidly directly or indirectly connected to at least one washing device.

9. System according to one of the foregoing claims, wherein the system comprises at least one second reservoir for storing heated unused process water, in particular unfouled washing water, wherein the sixth outlet is fluidly directly or indirectly connected to said second reservoir, wherein said second reservoir is configured to be fluidly directly or indirectly connected to at least one washing device.

10. System according to one of the foregoing claims, wherein the system comprises at least one industrial washing device connected to the fifth inlet of the intermediate heat exchanger.

11. System according to one of the foregoing claims, wherein the system comprises at least one industrial washing device connected to the first inlet of the primary heat exchanger of the heat regenerating circuit.

12. System according to one of the foregoing claims, wherein the system comprises at least one industrial washing device connected to the fourth outlet of the heat pump of the heat regenerating circuit, wherein the system preferably comprises at least one industrial washing device connected both the first inlet of the primary heat exchanger and to the fourth outlet of the heat pump of the heat regenerating circuit.

13. System according to one of the foregoing claims, wherein the system comprises at least one industrial washing device comprising:
- at least one washing chamber for washing textile, in particular laundry,
- at least one washing water inlet connected to said washing chamber to conduct warm heated washing water into said washing chamber, and
at least one washing water outlet connected to said washing chamber to discharge fouled washing water from said washing chamber, wherein the said washing water outlet is connected directly or indirectly to the first inlet of the primary heat exchanger.

14. System according to one of the foregoing claims and used in an industrial textile washing machine, comprising:
- at least one heat regenerating circuit for regenerating heat from process water, in particular fouled and/or used washing water, comprising:
∘ at least one primary heat exchanger comprising:
▪ a first inlet fluidly directly or indirectly connected to at least one washing water outlet of at least one washing device to conduct process water, in particular fouled and/or used washing water, discharged from said washing device through said heat exchanger to transfer heat to an heat transfer liquid,
▪ a first outlet fluidly directly or indirectly connected to said first inlet to discharge cooled down, process water, in particular fouled and/or used washing water from said heat exchanger,
▪ a second inlet for heat transfer liquid, and
▪ a second outlet for heated heat transfer liquid;
∘ at least one heat pump for transferring regenerated heat to unfouled washing water, comprising:
▪ a third inlet fluidly directly or indirectly connected to the second outlet of the heat exchanger to conduct the heated heat transfer liquid into the heat pump,
▪ and third outlet fluidly directly or indirectly connected to the second inlet of the heat exchanger to discharge cooled down heat transfer liquid from the heat pump,
▪ a fourth inlet fluidly directly or indirectly connected or to a cool process water supply, in particular unfouled washing water supply, to conduct unfouled washing water into the heat pump, and
▪ a fourth outlet connected, directly or indirectly, to a process water inlet, in particular washing water inlet, of at least one washing device to conduct heated process water, in particular unfouled washing water, into said washing device,
wherein the system comprises an intermediate heat exchanger positioned and connected upstream of the heat regenerating circuit, wherein the intermediate heat exchanger comprises:
- a fifth inlet fluidly directly or indirectly connected to said at least one washing water outlet to conduct used process water, in particular fouled washing water, through said heat exchanger to transfer a part of the heat of said used process water, in particular fouled washing water, to unused process water, in particular unfouled washing water,
- a fifth outlet fluidly connected to said fifth inlet to discharge cooled down, used process water, in particular fouled washing water, from said heat exchanger, and connected directly or indirectly to the first inlet of the heat regenerating circuit,
- a sixth inlet for cold unused process water, in particular unfouled washing water, to conduct cold unused process water, in particular unfouled washing water, into the intermediate heat exchanger, and
- a sixth outlet fluidly directly or indirectly connected to a washing water inlet of at least one washing device to conduct heated, unused process water, in particular unfouled washing water, into said washing device.

15. A method for heating process water, in particular washing water, for use in an industrial textile washing machine, in particular by regenerating heat released by at least one industrial textile washing machine, wherein preferably use is made of a system according to one of the foregoing claims, comprising the steps of:
A) conducting hot used process water, in particular hot fouled washing water, discharged from at least one industrial washing device into at least one primary heat exchanger,
B) conducting a heat transfer liquid into said primary heat exchanger to allow heat to be transferred from the hot process water, in particular hot fouled washing water, to said heat transfer liquid,
C) subsequently conducting said heated heat transfer liquid into a heat pump,
D) conducting cool unused process water, in particular unfouled washing water, into said heat pump allowing heat to be transferred from said heated heat transfer liquid to said unused process water, in particular unfouled washing water, and
E) conducting said heated unused processed water, in particular unfouled washing water, into at least one industrial washing machine for washing and/or treating textile, in particular laundry.
